# EUROPÄISCHE PATENTSCHRIFT

(11) **EP 3 346 160 B1**
(45) Veröffentlichungstag und Bekanntmachung des Hinweises auf die Patenterteilung: **20.03.2019**
(21) Anmeldenummer: 17150510.0
(22) Anmeldetag: 06.01.2017
(51) Int. Cl.: F16G 1/14, F16G 1/28

(54) **HERSTELLUNGSVERFAHREN ZUR ANBRINGUNG EINES PROFILS AUF EINEN ZAHNRIEMEN**
MANUFACTURING METHOD FOR ATTACHING A PROFILE ONTO A TOOTHED BELT
PROCÉDÉ DE FABRICATION DESTINÉ À APPLIQUER UN PROFIL SUR UNE COURROIE DENTÉE

(43) Veröffentlichungstag der Anmeldung: 11.07.2018
(73) Patentinhaber: BRECO Antriebstechnik Breher GmbH & Co. KG, 32457 Porta Westfalica (DE)
(72) Erfinder: STEINERT, Thomas, Dr., 32545 Bad Oeynhausen (DE)
(74) Vertreter: Zenz Patentanwälte Partnerschaft mbB

(56) Entgegenhaltungen:
- WO-A1-2016/123645
- LionAlex: "GT3 120mm Timing Belt", , 9. Mai 2014 (2014-05-09), XP002771847, www.thingiverse.com Gefunden im Internet: URL:https://www.thingiverse.com/thing:3250 85 [gefunden am 2017-07-06]
- Anteino: "Customizable GT2 timing belt", , 17. Dezember 2016 (2016-12-17), XP002771848, www.thingiverse.com Gefunden im Internet: URL:https://www.thingiverse.com/thing:1975 381 [gefunden am 2017-07-06]
- B&B MANUFACTURING: "Timing Belts & Components for 3D Printers", , 4. Dezember 2016 (2016-12-04), XP002771849, Gefunden im Internet: URL:https://web.archive.org/web/2016120402 0835/https://www.bbman.com/3d-printers/ [gefunden am 2017-07-06]
- Zen Toolworks: "Zen Toolworks Flexible Filament 3D Printed Timing Belt", , 24. Juli 2014 (2014-07-24), XP054977525, Gefunden im Internet: URL:https://www.youtube.com/watch?v=xgGvaA 9S44E [gefunden am 2017-07-06]

## Beschreibung

Die Erfindung betrifft ein Herstellungsverfahren zur stoffschlüssigen Anbringung eines Profils mit wenigstens einem Profilelement auf einem als Halbzeug vorproduzierten Zahnriemen mit einer eine Verzahnung aufweisenden Zahnseite und mit einem rückseitig der Zahnseite des Zahnriemens befindlichen Zahnriemenrücken.

Aus der WO 2016/123645 A1 ist ein Endlosband mit einem Bandkörper aus Metall bekannt, wobei das Endlosband eine Außenseite und eine Innenseite aufweist, wobei die Außenseite und die Innenseite durch Seitenflächen miteinander verbunden sind, wobei die Außenseite des Endlosbandes einen Belag aufweist, der auf den Bandkörper aufgeklebt ist.

Die Website Thingiverse.com stellt Design-Daten zum Sammeln oder zum Tauschen bereit, wobei die Design-Daten von 3D-Druckern, Laser-Cuttern, CNC-Fräsen und anderen Maschinen zur physischen Umsetzung verwendet werden können. So werden zum Beispiel von dieser Website Design-Daten für Zahnriemen (LionAlex: "GT3 120mm Timing Belt", www.thingiverse.com/thing:325085 und Anteino: "Customizable GT2 timing belt", https://www.thingiverse.com/thing:1975381) zur Verfügung gestellt. Ferner ist aus dem Internet (B&B MANUFACTORING: "Timing Belts & Components for 3D Printers", web.archive.org/web/20161204020835/https://www.bbman.com/3d-printers/) ein Zahnriemen und Komponenten für einen 3D-Drucker bekannt, wobei der Zahnriemen für die Bewegung und Positionierung des Druckkopfes eines 3D-Druckers eingesetzt wird.

Ein herzustellender Zahnriemen der eingangs genannten Art weist auf einer Seite die Zähne des Zahnriemens auf. Auf einer anderen Seite, d.h. rückseitig zu der Zahnseite des Zahnriemens, ist ein Profil angeordnet. Das Profil kann ein einziges Profilelement oder mehrere Profilelemente aufweisen, wobei bei mehreren Profilelementen die einzelnen Profilelemente identisch oder unterschiedlich zueinander ausgebildet sein können. Derartige Zahnriemen mit einem Profil, das auf der Rückseite des Zahnriemens positioniert ist, werden zum Beispiel in Produktionslinien verwendet. Das Profil dient dort der Beförderung von Werkstücken von einer Bearbeitungsstation zu einer anderen Bearbeitungsstation.

Die gewünschte Art eines Profils, beispielsweise hinsichtlich der Form einzelner Profilelemente und des Abstands zwischen zwei benachbarten Profilelementen, ist in nahezu beliebig vielen Ausgestaltungen denkbar und von dem jeweils gewünschten Verwendungszweck abhängig. Aus diesem Umstand ergibt sich der Bedarf, eine profilierte Rückseite eines Zahnriemens für spezifische Verwendungszwecke maßschneidern zu können.

Bei den bekannten Ansätzen zur Herstellung von profilierten Zahnriemen wird ein vorgefertigter Zahnriemen als Halbzeug bereitgestellt. Die Bereitstellung eines Zahnriemens als Halbzeug erlaubt dabei, einen beträchtlichen Anteil des Volumens des herzustellenden Zahnriemens bereits initial zur Verfügung zu stellen, um den gesamten Zeitaufwand für die Fertigung zu minimieren. Die bekannten Ansätze umfassen ferner einen Arbeitsschritt, in welchem die das Profil bildenden Profilelemente, beispielweise durch Spritzen, Gießen oder Zerspanen, hergestellt werden. In einem weiteren Arbeitsschritt werden die zuvor hergestellten Profilelemente mit einem ebenfalls zuvor hergestellten Zahnriemen gefügt. Das Fügen der einzelnen Profilelemente kann stoffschlüssig durch Aufschweißen oder formschlüssig durch Montieren (zum Beispiel Aufschrauben) erfolgen. Zumindest bei dem stoffschlüssigen Fügen muss in einem weiteren Arbeitsschritt der beim Aufschweißen austretende Schweißgrat entfernt werden. Da die einzelnen Profilelemente bei diesen bekannten Ansätzen vorgefertigt und manuell mit dem Zahnriemen gefügt werden müssen, ist das Herstellungsverfahren zeit- und kostenaufwendig. Der hohe Aufwand ist nicht zuletzt Resultat der Notwendigkeit, Spezialwerkzeuge wie beispielsweise Spritzgussformen bereitzustellen. Auch können während des Anbringens der einzelnen Profilelemente oder nach Abschluss des Anbringens der einzelnen Profileelemente aufwändige manuelle Nacharbeiten an den einzelnen Profilelementen erforderlich werden. Als nachteiliges Beispiel für das manuelle Nacharbeiten bei aufgeschweißten Profilelementen sei der Arbeitsschritt des Entgratens genannt.

Der Erfindung liegt die Aufgabe zugrunde eine Lösung zu schaffen, die ein Herstellungsverfahren zur stoffschlüssigen Anbringung eines Profils mit wenigstens einem Profilelement auf einem als Halbzeug vorproduzierten Zahnriemen bereitstellt, das kostengünstig ist und eine ausreichende mechanische Belastbarkeit des anzubringenden Profils gewährleistet.

Diese Aufgabe wird erfindungsgemäß gelöst durch ein Herstellungsverfahren mit den Merkmalen gemäß dem Patentanspruch 1. Insbesondere wird die Aufgabe erfindungsgemäß dadurch gelöst, dass das wenigstens eine Profilelement lagenweise aus wenigstens einer ersten Profilelementlage und einer zweiten Profilelementlage auf dem Zahnriemenrücken aufgebaut wird, indem an einer Profilelementposition mittels Schmelzschichtdruckens eine Auftragsmasse auf dem Zahnriemenrücken aufgetragen wird.

Vorteilhafte und zweckmäßige Ausgestaltungen und Weiterbildungen der Erfindung ergeben sich aus den Unteransprüchen.

Durch die Erfindung wird ein Herstellungsverfahren zur stoffschlüssigen Anbringung eines Profils mit wenigstens einem Profilelement auf einem als Halbzeug vorproduzierten Zahnriemen zur Verfügung gestellt, welches sich durch große Flexibilität hinsichtlich der Formgestaltung der aufzubringenden Profilelemente auszeichnet. Mit Hilfe des Schmelzschichtdruckens können Profilelemente beliebiger Form direkt auf einen als Halbzeug vorgefertigten Zahnriemen gedruckt werden. Dabei umfasst der erfindungsgemäße Arbeitsschritt des Schmelzschichtdruckens die bei dem bekannten Ansatz des Aufschweißens erforderlichen Arbeitsschritte des separaten Herstellens von Profilelementen, des Fügens und des Entgratens, so dass bei gesteigerter Flexibilität, was die Form der Profilelemente anbelangt, mehrere Arbeitsschritte eingespart werden können. Das erfindungsgemäße Herstellungsverfahren vermeidet dabei Kompromisse hinsichtlich der mechanischen Belastbarkeit und der Haltbarkeit der hergestellten Zahnriemen, denn durch das Schmelzschichtdrucken werden Profilelemente an einem Zahnriemen ausgebildet, die sich hinsichtlich ihrer Belastbarkeit und Haltbarkeit nicht von Profilelementen unterscheiden, die mit Hilfe der aus dem Stand der Technik bekannten Ansätze an einen Zahnriemen gefügt werden. Die durch das Schmelzschichtdrucken gewonnene Flexibilität drückt sich dabei nicht nur in der Formgebung der Profilelemente aus. Vielmehr ist durch die Erfindung eine signifikante Senkung des Herstellungsaufwandes und der Herstellungskosten insbesondere bei kleinen Stückzahlen mit individuell anzufertigenden Profilelementen möglich, bei denen sich die Erstellung eines Spritzwerkzeuges wirtschaftlich betrachtet nicht lohnen würde. Dadurch, dass ausschließlich das Profil des Zahnriemens mittels Schmelzschichtdruckens ausgebildet wird, wird in vorteilhafter Weise die hohe Flexibilität in Anpassbarkeit der Form der Profile mit einem zeiteffizienten Vorgehen kombiniert. Denn eine zur Herstellung der Profilelemente oder des gesamten profilierten Zahnriemens bislang erforderliche Bereitstellung entsprechender Spezialwerkzeuge, insbesondere Spritzwerkzeuge, oder die Nutzung von zeit- und kostenintensiven Spanvorgängen zur Profilherstellung entfällt durch das erfindungsgemäße Herstellungsverfahren.

Bei dem erfindungsgemäßen Herstellungsverfahren ist in Ausgestaltung des Verfahrensschrittes des Aufbauens des wenigstens einen Profilelements vorgesehen, dass ein Schmelzschicht-3D-Drucker mit wenigstens einem Druckkopf bereitgestellt wird, dass die Profilelementposition des Zahnriemenrückens in einen Arbeitsbereich des Druckkopfes des Schmelzschicht-3D-Druckers positioniert wird, dass zumindest die Profilelementposition des Zahnriemenrückens auf eine vorgegebene Auftragstemperatur erwärmt wird, dass die erste Profilelementlage mittels Schmelzschichtdruckens aus der Auftragsmasse aufgetragen wird, nachdem der Zahnriemenrücken die vorgegebene Auftragstemperatur erreicht hat, dass beginnend auf der ersten Profilelementlage wenigstens die zweite Profilelementlage aus der Auftragsmasse lagenweise aufgetragen wird, und dass das wenigstens eine Profilelement mittels Auftragens von Profilelementlagen aus der Auftragsmasse fertiggestellt wird und das fertiggestellte Profilelement aus dem Arbeitsbereich herausbewegt wird. Beim Positionieren der Profilelementposition des Zahnriemenrückens wird der als Halbzeug vorproduzierte Zahnriemen relativ zu dem Druckkopf des Schmelzschicht-3D-Druckers bewegt, so dass die Profilelementposition des Zahnriemenrückens in dem Arbeitsbereich des Druckkopfes positioniert wird. Es ist dazu eine Bewegung des Zahnriemenrückens, eine Bewegung des Druckkopfes oder eine Bewegung von beiden relativ zueinander möglich. Wesentlich ist, dass der Druckkopf derart zu dem Zahnriemenrücken positioniert wird, dass ein Auftragen der Auftragsmasse auf den Zahnriemenrücken im Bereich der Profilelementposition gestartet werden kann. Bei der vorgegebenen Auftragstemperatur handelt es sich um eine Temperatur, welche zumindest der Zahnriemenrücken in seiner Profilelementposition zu dem Zeitpunkt aufweist, an dem mit dem Auftragen der ersten Profilelementlage begonnen wird. Ob das Positionieren und das Erwärmen nacheinander oder teilweise oder vollständig gleichzeitig vorgenommen werden, ist dabei nicht wesentlich, sondern kann abhängig von den Rahmenbedingungen individuell entschieden werden. Nachdem der Zahnriemen die vorgegebene Auftragstemperatur erreicht hat, wird mit dem Auftragen der ersten Profilelementlage mittels Schmelzschichtdruckens aus der Auftragsmasse begonnen, auf der dann ein lagenweises Auftragen wenigstens der zweiten Profilelementlage aus der Auftragsmasse erfolgt, bis das Profilelement fertiggestellt ist und anschließend aus dem Arbeitsbereich herausbewegt wird. Dies umfasst insbesondere, dass mittels des Schmelzschichtdruckens ein Profil in einer Weise fertiggestellt werden kann, dass eine Nachbearbeitung nicht erforderlich ist. Die erfindungsgemäß vorgesehene Kombination der Bereitstellung eines Halbzeugs und des Aufbringens eines Profilelements mittels Schmelzschichtdruckens führt zu dem erheblichen Vorteil, dass mit hoher Zeiteffizienz ein Zahnriemen mit auf dem Zahnriemenrücken angeordneten Profilen hergestellt werden kann, welches ohne Erfordernis eines Nachbearbeitens ermöglicht wird. Dies schließt selbstverständlich nicht aus, dass ein Nachbearbeiten des Profilelements erfolgt, welches dann aber optional durchgeführt wird.

Um besonders gute Festigkeitseigenschaften des Profilelements und der Befestigungsstelle des Profilelements auf dem Zahnriemen zu erreichen, ist in Ausgestaltung der Erfindung bevorzugt vorgesehen, dass der Druckkopf beim Auftragen einer zweiten oder einer weiteren Profilelementlage auf der unmittelbar zuvor aufgetragenen Profilelementlage derart aufliegend bewegt wird, dass eine Vorspannung auf die zuvor gedruckte Profilelementlage ausgeübt wird. Mit anderen Worten wird die Bewegungsführung des Druckkopfes derart gesteuert, dass entweder unmittelbar durch den Druckkopf oder mittelbar über eine jeweils abgelegte Auftragsmasse Druck auf diejenige Profilelementlage ausgeübt wird, die unmittelbar vor der zu einem gewissen Zeitpunkt im Druck befindlichen Profilelementlage fertiggestellt wurde. Da auch die zuvor positionierten Profilelementlagen noch nicht vollständig verfestigt sind, führt die ausgeübte Vorspannung im Zuge des Aushärtens der einzelnen Profilelementlagen dazu, dass die Vorspannung in dem fertiggestellten Profilelement verstetigt wird. Es hat sich gezeigt, dass eine derartige Vorgehensweise eine höhere mechanische Belastbarkeit der aufgetragenen Profile herbeiführt, die insbesondere hinsichtlich Zug- und Scherfestigkeit ihre vorteilhafte Wirkung entfaltet.

Bevorzugt ist in weiterer Ausgestaltung der Erfindung vorgesehen, dass der Zahnriemen ein erstes thermoplastisches Polyurethan aufweist. Insbesondere ist bevorzugt, dass der Zahnriemen an der Profilelementposition ein erstes thermoplastisches Polyurethan aufweist. Besonders bevorzugt ist vorgesehen, dass der gesamte Zahnriemen zumindest an seiner Oberfläche mit dem ersten thermoplastischen Polyurethan versehen ist oder der Zahnriemen vollständig massiv aus dem ersten thermoplastischen Polyurethan besteht. Als erstes thermoplastisches Polyurethan bietet sich insbesondere Polyester oder Polyether an. Polyester und Polyether sind kostengünstig und allgegenwärtig verfügbar. Darüber hinaus verfügen die Materialklassen der Polyester und der Polyether neben dem gewünschten thermoplastischen Verhalten über eine Vielzahl von weiteren positiven Eigenschaften, insbesondere auch hinsichtlich ihrer mechanischen Stabilität und ihrer guten Eignung zur Weiterverarbeitung.

Als besonders vorteilhaft hat sich in Ausgestaltung der Erfindung eine Verfahrensführung erwiesen, bei welcher die vorgegebene Auftragstemperatur für das Erwärmen zumindest der Profilelementposition des Zahnriemenrückens zwischen der Glasübergangstemperatur des ersten thermoplastischen Polyurethans und einer um wenigstens 10K, bevorzugt 20K, höheren Temperatur als der Glasübergangstemperatur des ersten thermoplastischen Polyurethans liegt. Es hat sich gezeigt, dass das Überschreiten der Glasübergangstemperatur Voraussetzungen schafft, um eine besonders gute Verbindung der aufgetragenen Profilelemente mit dem Zahnriemenrücken an der Profilelementposition zu schaffen. Auch hat sich gezeigt, dass eine zu hohe Auftragstemperatur den Nachteil mit sich bringt, dass als Folge der während des Schmelzschichtdruckens auftretenden mechanischen Kräfte Verformungen des Zahnriemenrückens herbeigeführt werden. Diese sind teilweise irreversibel und daher unerwünscht, da sie die exakte Steuerbarkeit der Form und der Eigenschaften des fertiggestellten Zahnriemens negativ beeinträchtigen.

Als Polyester kommen in Ausgestaltung der Erfindung beispielsweise PBT, PET, PLA, PTT, PEN, PC, PEC, PAR oder UP in Betracht. Als Polyether kommen ferner beispielsweise PEEK oder PEK oder PETK in Betracht. Als Polyurethan kann allerdings auch ein Gemisch oder Gemenge aus verschiedenen Polyurethanen verwendet werden, insbesondere kann auch ein Gemisch oder ein Gemenge aus Polyestern mit Polyethern genutzt werden.

Der Begriff des Polyurethans soll dabei im Sinne der Erfindung umfassen, dass Polyurethan den Hauptbestandteil des jeweiligen Materials darstellt, aber zusätzlich noch andere Werkstoffe zugefügt bzw. zugemengt sein dürfen, wobei jedoch ein Volumenanteil des Polyurethans beziehungsweise der Polyurethane wenigstens 50% beträgt.

Zur Erwärmung des Zahnriemenrückens können in Ausgestaltung der Erfindung konvektive Verfahren oder Wärmestrahlungs- und Wärmeübergangsverfahren vorgesehen sein. Insbesondere kann vorgesehen sein, dass der Zahnriemen auf seiner Zahnungsseite mit einer Heizplatte erwärmt wird und die Erwärmung des Zahnriemenrückens mittels Wärmeleitung durch den Zahnriemen erfolgt. Auch eine Kombination aus zweien oder mehreren dieser Verfahren zum Erwärmen kann vorgesehen sein.

In Ausgestaltung der Erfindung ist als Auftragsmasse bevorzugt ein zweites thermoplastisches Polyurethan vorgesehen. Das bedeutet, dass die Auftragsmasse wenigstens zu 50%, bevorzugt zu wenigstens 90%, besonders bevorzugt zu wenigstens 95% aus thermoplastischem Polyurethan besteht. Ein besonders bevorzugter Fall liegt vor, wenn die Auftragsmasse ausschließlich aus thermoplastischem Polyurethan besteht, bevorzugt aus einem einzigen thermoplastischen Polyurethan. Als thermoplastisches Polyurethan kann dabei Polyester und/oder Polyether verwendet werden, wobei grundsätzlich vor allem dieselben Polyester und/oder Polyether wie für das erste thermoplastische Polyurethan in Frage kommen. Auch für die Auftragsmasse kann vorgesehen sein, dass ein Gemisch oder ein Gemenge aus mehreren der genannten Polyester oder Polyether verwendet wird. Bevorzugt wird jedoch ein thermoplastisches Polyurethan, das als ein reiner Werkstoff vorliegt. Besonders bevorzugt ist, dass für den Zahnriemenrücken, zumindest an der Profilelementposition, und für die Auftragsmasse ein gleicher Werkstoff verwendet wird. Insbesondere die stoffschlüssige Verbindung zwischen Zahnriemenrücken und Profilelement wird durch die derartige Verwendung eines gleichen Materials begünstigt. Außerdem kann die Wahrscheinlichkeit für chemische Reaktionen, die für die Qualität des Stoffschlusses nachteilig sind, bei Verwendung eines gleichen Werkstoffs reduziert werden.

Um eine gute stoffschlüssige Verbindung zwischen der ersten Profilelementlage und dem Zahnriemenrücken zu bewerkstelligen, hat es sich in Ausgestaltung der Erfindung als vorteilhaft erwiesen, dass die erste Profilelementlage eine höhere Lagenhöhe als die zweite Profilelementlage, bevorzugt als alle weiteren Profilelementlagen, aufweist. Gute Ergebnisse wurden mit einer Konfiguration erreicht, bei welcher die erste Profilelementlage mit einer Lagenhöhe von wenigstens dem 1,5-fachen der Lagenhöhe der zweiten Profilelementlage ausgebildet wird.

Eine bevorzugte Ausgestaltung des erfindungsgemäßen Herstellungsverfahrens sieht vor, dass die erste Profilelementlage eine Lagenhöhe von 0,18mm bis 0,22mm aufweist und die zweite Profilelementlage eine Lagenhöhe zwischen 0,08mm und 0,12mm aufweist. Mit den genannten Lagenhöhen wird einerseits erreicht, dass die Auflösungsgrenzen typischer kommerziell verfügbarer 3D-Drucker ausgenutzt werden, während gleichzeitig ein Kompromiss zwischen Auftragsgeschwindigkeit und bezweckter Festigkeit des fertiggestellten Profilelements erreicht wird.

Eine bevorzugte Ausgestaltung des erfindungsgemäßen Herstellungsverfahrens sieht ferner vor, dass die erste Profilelementlage mit einer Massetemperatur gedruckt wird, die zwischen 5K und 10K oberhalb der Schmelztemperatur der Auftragsmasse liegt. Hieran anschließend wird im Verlauf des lagenweisen Auftragens der Profilelementlagen die Massetemperatur auf einen Wert oberhalb der Schmelztemperatur der Auftragsmasse gesenkt, der gleichzeitig bevorzugt weniger als 2,5K oberhalb der Schmelztemperatur der Auftragsmasse liegt, besonders bevorzugt weniger als 1K oberhalb der Schmelztemperatur der Auftragsmasse liegt. Ein derartiger Verfahrensverlauf ermöglicht, dass die erste Profilelementlage ausreichend Wärme aufweist, um eine haltbare Verbindung mit dem Zahnriemenrücken einzugehen. Insbesondere, wenn der Zahnriemenrücken die ihm vorgegebene Auftragstemperatur aufweist, und die vorgegebene Auftragstemperatur im Bereich der Glasübergangstemperatur des ersten Polyurethans liegt, kann durch die zwischen 5K und 10K oberhalb der Schmelztemperatur befindliche Temperatur der Auftragsmasse ein kurzzeitiges Einschmelzen der Auftragsmasse an den Zahnriemenrücken gelingen. Besonders vorteilhaft ist eine Auftragstemperatur des Zahnriemenrückens, die zwischen der Glasübergangstemperatur und einer um 20K höheren Temperatur liegt. Dieser Aspekt entfaltet seine Wirkung in besonders vorteilhafter Weise bei der oben genannten Wahl der Lagendicke der ersten Profilelementlage. Gleichzeitig wird durch die kontrollierte Begrenzung der Temperatur im Bereich oberhalb der Schmelztemperatur erreicht, dass keine unerwünschte Verformung des Zahnriemenrückens erfolgt. Um durch das Auftragen der Profilelementlagen eine Deformation der jeweils unter einer Profilelementlage liegenden, vorher aufgetragenen Profilelementlage zu verhindern, ist vorgesehen, dass mit weiterem Auftragen der Profilelementlagen die Massetemperatur sukzessive in der oben beschrieben Weise sinkt.

Die Erfindung sieht in Ausgestaltung ferner vor, dass zur Positionierung des Zahnriemens der Zahnriemen bevorzugt in einen taktfähig antreibbaren Riementrieb aufgespannt wird. Sodann kann zum Positionieren der Profilelementposition zu dem Arbeitsbereich des Druckkopfes ein getaktetes Bewegen des Riementriebs genutzt werden. In die Dimension einer Längsrichtung des Zahnriemens ist durch diese Vorgehensweise eine wunschgemäß genaue Positionierung des Zahnriemens möglich.

Zum Auftragen der Auftragsmasse kann in Ausgestaltung der Erfindung eine Bewegung des Druckkopfs mit einem Roboterarm vorgesehen sein. Es wird bevorzugt ein entlang von drei Raumachsen bewegbarer Roboterarm verwendet, der zusätzlich um wenigstens zwei der drei Raumachsen schwenkbar bewegbar ist. Grundsätzlich kann vorgesehen sein, dass bei dem Ablegen der Auftragsmasse diese mit dem Druckkopf um seine eigene Längsachse teilweise gedreht wird, um mittels einer dadurch entstehenden Zwirbelstruktur weitere Festigkeitsvorteile zu erlangen.

Um sicherzustellen, dass die Qualität und Festigkeit der ausgehärteten Auftragsmasse den mechanischen Anforderungen an den profilierten Zahnriemen genügen, ist in Ausgestaltung der Erfindung vorgesehen, dass die Auftragsmasse vor dem Auftragen auf den Zahnriemenrücken in einer Trocknungskammer gelagert und auf eine vorgegebene Restfeuchte bevorratet wird, wobei die Auftragsmasse unmittelbar vor dem Zuführen zum Druckkopf aus der Trocknungskammer entnommen wird. Besonders gute Ergebnisse werden erlangt, wenn sichergestellt ist, dass die Auftragsmasse mit einer Restfeuchte von 0,05Gew.-% oder weniger als 0,05Gew.-% aufgetragen wird.

Zur Prozess- und Qualitätskontrolle ist ferner in Ausgestaltung des erfindungsgemäßen Verfahrens vorgesehen, dass die Umgebungstemperatur und/oder die Umgebungsfeuchte während des Auftragens überwacht und auf einen jeweils konstanten, vorgegebenen Wert gehalten werden, wobei dieser Wert geregelt werden kann.

Um eine gute Haftung zwischen einem Profilelement und dem Zahnriemenrücken zu gewährleisten, ist gemäß einer weiteren vorteilhaften Ausgestaltung vorgesehen, dass der Zahnriemenrücken vor dem Auftragen der Auftragsmasse auf den Zahnriemenrücken einer Reinigung zur Entfernung von Wachsen unterzogen wird.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 eine perspektivische Ansicht auf einen Teilabschnitt eines Zahnriemenrückens eines Zahnriemens,
Figur 2 eine perspektivische Ansicht auf den Zahnriemen aus Figur 1, wobei eine erste Profilelementlage eines Profilelements auf den Zahnriemenrücken aufgebracht ist,
Figur 3 eine perspektivische Ansicht auf den Zahnriemen aus Figur 2, wobei auf die erste Profilelementlage eine zweite Profilelementlage aufgebracht ist,
Figur 4 eine perspektivische Ansicht auf den Zahnriemen aus Figur 3, wobei weitere zweite Profilelementlagen auf die zuvor aufgebrachten Profilelementlagen aufgebracht sind,
Figur 5 eine perspektivische Ansicht auf den Zahnriemen aus Figur 4, wobei das Profilelement durch lagenweises Aufbringen von Profilelementlagen fertiggestellt ist, und

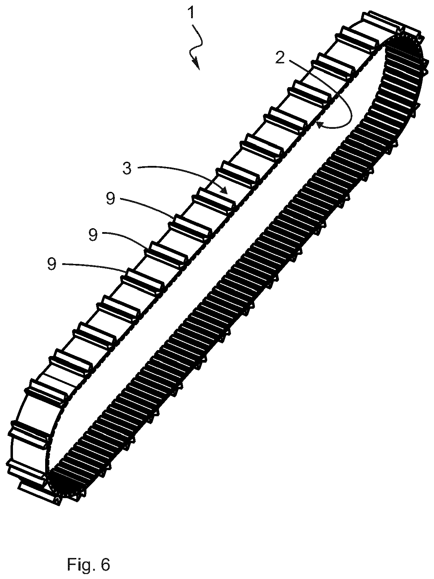

Figur 6 eine perspektivische Ansicht eines Zahnriemens mit fertiggestelltem Profilelement.

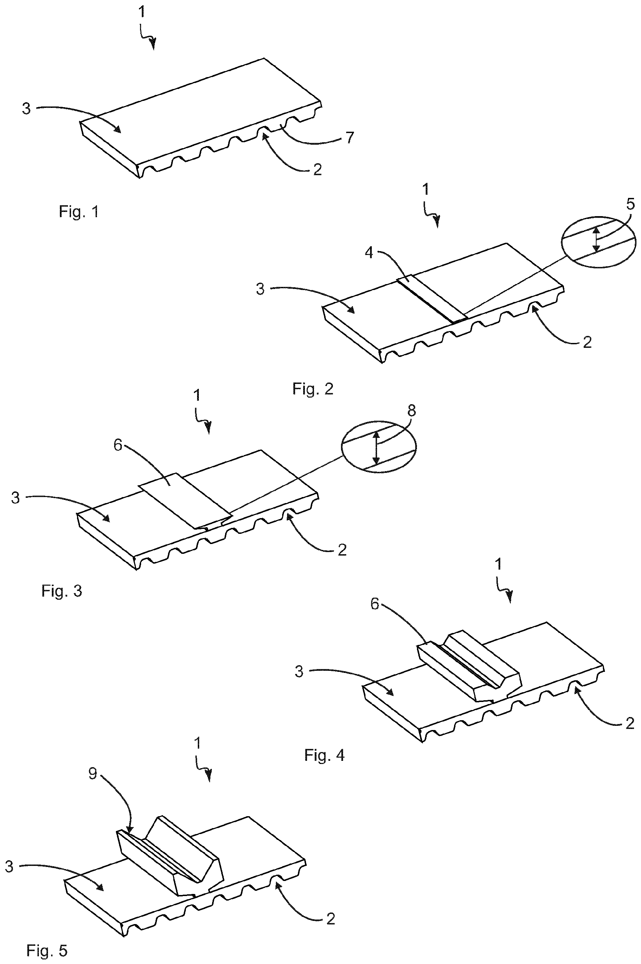

In Figur 1 ist ein Teilabschnitt eines vorproduzierten Zahnriemens 1 zu sehen, der auf bekannte Weise hergestellt ist und der als Halbzeug für das erfindungsgemäße Verfahren zur stoffschlüssigen Anbringung von wenigstens einem Profilelement bereitgestellt wird. Der vorproduzierte Zahnriemen 1 weist auf einer ersten Seite, die im Rahmen der Erfindung als Zahnseite 2 bezeichnet wird, eine Anzahl von Zähnen 7 auf. Die andere Seite, d.h. die der Zahnseite 2 gegenüberliegende Seite des Zahnriemens 1, stellt einen Zahnriemenrücken 3 dar. Auf dem Zahnriemenrücken 3 soll mittels Schmelzschichtdruckens ein Profil mit wenigstens einem Profilelement stoffschlüssig angebracht werden, wobei das wenigstens eine Profilelement lagenweise aus einer Auftragsmasse aufgebaut wird. Vor dem Auftragen der Auftragsmasse auf den Zahnriemenrücken 3 des Zahnriemens 2 wird der Zahnriemenrücken 3 gereinigt, um Fettfreiheit, Sauberkeit und Freiheit von sogenannten Verarbeitungswachsen zu erreichen. Anschließend wird der Zahnriemen an seiner Profilelementposition, also der Position, an welcher das Profilelement anschließend auf den Zahnriemenrücken gedruckt werden soll, positioniert, wobei sich die Positionierung an einen Arbeitsbereich eines Druckkopfes eines Schmelzschicht-3D-Druckers orientiert. Nach der Positionierung wird dann zumindest die Profilelementposition des Zahnriemenrückens auf eine vorgegebene Auftragstemperatur erwärmt. In dem vorliegend beschriebenen Ausführungsbeispiel besteht der Zahnriemen 1 aus einem thermoplastischen Polyurethan (TPU), wobei die vorgegebene Auftragstemperatur, auf welche der Zahnriemenrücken 2 oder zumindest die Profilelementposition des Zahnriemens 1 erwärmt wird, 80°C beträgt.

Nachdem die vorgegebene Auftragstemperatur von 80°C zumindest für die Profilelementposition sichergestellt ist, wozu entsprechende Messfühler oder Sensoren vorgesehen sind, werden die Schmelzdüsen des Schmelzschicht-3D-Druckers auf 235°C aufgeheizt, was einer Temperatur oberhalb der Schmelztemperatur einer Auftragsmasse entspricht, aus welcher das herzustellende Profilelement ausgebildet wird. Bei der Auftragsmasse handelt es sich ebenfalls um ein thermoplastisches Polyurethan (TPU). Sobald die Schmelzdüsen aufgeheizt sind, wird eine erste Profilelementlage 4 mittels Schmelzschichtdruckens aus der Auftragsmasse auf die Profilelementposition aufgebracht, was in Figur 2 gezeigt ist. Die erste Profilelementlage 4 weist eine Lagenhöhe 5 von 0,2mm auf.

Nach dem Auftragen der ersten Profilelementlage 4 folgt das Auftragen einer zweiten Profilelementlage 6, was in Figur 3 gezeigt ist. Die zweite Profilelementlage 6 weist eine Lagenhöhe 8 von 0,1mm auf. Es hat sich als vorteilhaft gezeigt, dass die erste Profilelementlage 4 gegenüber der zweiten Profilelementlage 6 mit einer wenigstens 1,5-fachen Lagenhöhe ausgebildet wird.

In den Figuren 4 und 5 werden dann weitere zweite Profilelementlagen 6 auf die zuvor aufgebrachten zweiten Profilelementlagen 6 aufgebracht, bis das Profilelement 9 für die eine Profilelementposition fertiggestellt ist (siehe Figur 5). Beim Auftragen der zweiten oder einer weiteren Profilelementlage auf die unmittelbar zuvor aufgetragene Profilelementlage wird der Druckkopf derart aufliegend bewegt, dass eine Vorspannung auf die zuvor gedruckte Profilelementlage ausgeübt wird. Ferner wird die erste Profilelementlage 4 mit einer Massetemperatur gedruckt, die zwischen 5K und 10K oberhalb der Schmelztemperatur der Auftragsmasse liegt, wobei im Verlauf des lagenweisen Auftragens der zweiten Profilelementlagen 6 die Massetemperatur auf einen Wert oberhalb der Schmelztemperatur der Auftragsmasse gesenkt wird, der weniger als 2,5K, bevorzugt weniger als 1K, oberhalb der Schmelztemperatur der Auftragsmasse liegt. Während des Auftragens der verschiedenen Profilelementlagen 6 wird sukzessive mit wachsendem Abstand von der Oberfläche des Zahnriemenrückens 3 die Temperatur der Schmelzdüsen, d.h. die Massetemperatur, von 235°C auf 225°C reduziert. Der Temperaturbereich für die Massentemperatur ist derart gewählt, dass die Temperatur nicht zu niedrig ist, da bei zu niedrigen Temperaturen keine kontinuierliche Extrusion der Auftragsmasse durch den Schmelzschicht-3D-Drucker mehr sichergestellt ist. Andererseits darf die Temperatur auch nicht zu hoch sein, denn dadurch würde ein Aufschmelzen des jeweiligen Substrats und eine hierdurch bedingte Fadenbildung der extrudierten Auftragsmasse herbeigeführt werden. Zu beachten ist ferner, dass die Auftragsmasse vor dem Auftragen der ersten Profilelementlage 4 auf den Zahnriemenrücken 3 in einer Trocknungskammer gelagert und auf eine vorgegebene Restfeuchte bevorratet wird. Weist die Auftragsmasse eine Restfeuchte von 0,05 Gew.-% oder weniger als 0,05 Gew.-% auf, so wird sie aus der Trocknungskammer zu dem Druckkopf gefördert und auf den Zahnriemenrücken 3 aufgetragen. Andernfalls muss die Auftragsmasse derart getrocknet werden, dass die vorgegebene Restfeuchte eingehalten wird. Neben der Restfeuchte der Auftragsmasse ist die Umgebungstemperatur ein wichtiger Einflussfaktor für ein reibungsloses Schmelzschichtdrucken. Es wird daher vor und während des Auftragens der Auftragsmasse auf den Zahnriemenrücken 3 die Umgebungstemperatur und/oder die Umgebungsfeuchte überwacht und auf einen jeweils konstanten, vorgegebenen Wert gehalten, der von dem verwendeten Werkstoff des Zahnriemens sowie von dem für die Auftragsmasse verwendeten Werkstoff abhängig ist.

Weitere Profilelemente 9 können durch Weiterbewegen des Zahnriemens 1 zu entsprechend anderen Profilelementpositionen aufgetragen und fertiggestellt werden. Alternativ zu einer Bewegung des Zahnriemens 1 kann auch der Druckkopf an eine vorbestimmte weitere Profilelementposition weiterbewegt werden, um weitere Profilelemente aufzutragen und fertigzustellen, wobei bevorzugt eine Bewegung als Taktbewegung oder als Folge von Taktbewegungen des taktfähig antreibbaren Riementriebs erfolgt, um eine weitere Profilelementposition in den Arbeitsbereich des Druckkopfes zu befördern. Zur Illustration ist in Figur 2 ein Zahnriemen 1 mit einem fertiggestellten Profil aus einer Vielzahl von Profilelementen 9 dargestellt.

Der im Rahmen der Erfindung verwendete Begriff des Schmelzschichtdruckens bezeichnet ein 3D-Druck-Verfahren, bei welchem das zu druckende Objekt Schicht für Schicht aus einem flüssigen Kunststoff aufgetragen wird, indem ein dünner Kunststofffaden aus einer heißen Düse gedrückt wird. Es erfolgt also eine Extrusion eines Kunststofffilaments mit einem geführten Ablegen durch eine entsprechend bewegte Düse. Die Düse, die Bestandteil eines Druckkopfs ist, bewegt sich dabei relativ zu dem als Halbzeug vorproduzierten Zahnriemen, auf welchem gedruckt wird, um das zu druckende Objekt schichtweise aufzutragen.

Mit der Erfindung wird ein flexibles und kostengünstiges Herstellungsverfahren zur Anbringung von Profilelementen an einem vorgefertigten Zahnriemen bereitgestellt. Für die erfindungsgemäße Herstellung eines solchen Zahnriemens mit Profilelementen entfallen die bislang erforderlichen Arbeitsgänge des Spritzens, Gießens oder Zerspanens für benötigten Profilelemente und des anschließenden Fügens sowie Entgratens eines eventuell beim Fügen entstehenden Schweißgrates. Stattdessen wird mit der vorliegenden Erfindung ein automatisierbar betreibbares und produktivitätssteigerndes Herstellungsverfahren bereitgestellt.

## Patentansprüche

1. Herstellungsverfahren zur stoffschlüssigen Anbringung eines Profils mit wenigstens einem Profilelement (9) auf einem als Halbzeug vorproduzierten Zahnriemen (1) mit einer eine Verzahnung aufweisenden Zahnseite (2) und mit einem rückseitig der Zahnseite (2) des Zahnriemens (1) befindlichen Zahnriemenrücken (3),
**dadurch gekennzeichnet,**
**dass** das wenigstens eine Profilelement (9) lagenweise aus wenigstens einer ersten Profilelementlage (4) und einer zweiten Profilelementlage (6) auf dem Zahnriemenrücken (3) aufgebaut wird, indem an einer Profilelementposition mittels Schmelzschichtdruckens eine Auftragsmasse auf dem Zahnriemenrücken (3) aufgetragen wird.

2. Verfahren nach Anspruch 1, **dadurch gekennzeichnet, dass** das Aufbauen des wenigstens einen Profilelements (9) die folgenden Schritte umfasst:
• Bereitstellen eines Schmelzschicht-3D-Druckers mit wenigstens einem Druckkopf,
• Positionieren der Profilelementposition des Zahnriemenrückens (3) in einen Arbeitsbereich des Druckkopfes des Schmelzschicht-3D-Druckers,
• Erwärmen zumindest der Profilelementposition des Zahnriemenrückens (3) auf eine vorgegebene Auftragstemperatur,
• Auftragen der ersten Profilelementlage (4) mittels Schmelzschichtdruckens aus der Auftragsmasse, nachdem der Zahnriemenrücken die vorgegebene Auftragstemperatur erreicht hat,
• auf der ersten Profilelementlage beginnend lagenweises Auftragen wenigstens der zweiten Profilelementlage (6) aus der Auftragsmasse, und
• Fertigstellen des wenigstens einen Profilelements mittels Auftragens von Profilelementlagen (4, 6) aus der Auftragsmasse und Herausbewegen des fertiggestellten Profilelements aus dem Arbeitsbereich.

3. Verfahren nach Anspruch 2, **dadurch gekennzeichnet, dass** der Druckkopf beim Auftragen einer zweiten oder einer weiteren Profilelementlage auf der unmittelbar zuvor aufgetragenen Profilelementlage (4, 6) derart aufliegend bewegt wird, dass eine Vorspannung auf die zuvor gedruckte Profilelementlage (4, 6) ausgeübt wird.

4. Verfahren nach einem der vorhergehenden Ansprüche, **dadurch gekennzeichnet, dass** für den Zahnriemenrücken (3) zumindest an der Profilelementposition ein erstes thermoplastisches Polyurethan verwendet wird.

5. Verfahren nach Anspruch 4, **dadurch gekennzeichnet, dass** die vorgegebene Auftragstemperatur für das Erwärmen zumindest der Profilelementposition des Zahnriemenrückens (3) zwischen der Glasübergangstemperatur des ersten thermoplastischen Polyurethans und einer um 20K höheren Temperatur als der Glasübergangstemperatur des ersten thermoplastischen Polyurethans liegt.

6. Verfahren nach einem der Ansprüche 4 und 5, **dadurch gekennzeichnet, dass** als erstes thermoplastisches Polyurethan ein Polyester und/oder ein Polyether verwendet wird.

7. Verfahren nach einem der vorhergehenden Ansprüche,
**dadurch gekennzeichnet, dass** als die Auftragsmasse ein zweites thermoplastisches Polyurethan verwendet wird.

8. Verfahren nach Anspruch 7, **dadurch gekennzeichnet, dass** beim Auftragen als zweites thermoplastisches Polyurethan der Auftragsmasse ein Polyester und/oder ein Polyether verwendet wird.

9. Verfahren nach einem der vorhergehenden Ansprüche,
**dadurch gekennzeichnet, dass** die erste Profilelementlage (4) gegenüber der zweiten Profilelementlage (6) mit einer wenigstens 1,5-fachen Lagenhöhe (5, 8) ausgebildet wird.

10. Verfahren nach einem der vorhergehenden Ansprüche,
**dadurch gekennzeichnet, dass** die erste Profilelementlage (4) mit einer Massetemperatur gedruckt wird, die zwischen 5K und 10K oberhalb der Schmelztemperatur der Auftragsmasse liegt, und dass im Verlauf des lagenweisen Auftragens der Profilelementlagen (4, 6) die Massetemperatur auf einen Wert oberhalb der Schmelztemperatur der Auftragsmasse gesenkt wird, der weniger als 2,5K, bevorzugt weniger als 1K, oberhalb der Schmelztemperatur der Auftragsmasse liegt.

11. Verfahren nach Anspruch 2, **dadurch gekennzeichnet,**
**dass** die Auftragsmasse mittels eines den wenigstens einen Druckkopf bewegenden Roboterarms aufgetragen wird, wobei der Roboterarm entlang von drei Raumachsen bewegbar ist und zusätzlich um wenigstens zwei der drei Raumachsen schwenkbar bewegbar ist, welche parallel zu dem Zahnriemenrücken, bevorzugt in einem rechten Winkel zueinander orientiert, angeordnet sind.

12. Verfahren nach Anspruch 2, **dadurch gekennzeichnet, dass** die Auftragsmasse vor dem Auftragen auf den Zahnriemenrücken (3) in einer Trocknungskammer gelagert und auf eine vorgegebene Restfeuchte bevorratet wird, aus welcher die Auftragsmasse vor dem Zuführen zum Druckkopf entnommen wird.

13. Verfahren nach einem der vorhergehenden Ansprüche,
**dadurch gekennzeichnet, dass** die Auftragsmasse mit einer Restfeuchte von 0,05 Gew.-% oder weniger als 0,05 Gew.-% aufgetragen wird.

14. Verfahren nach einem der vorhergehenden Ansprüche,
**dadurch gekennzeichnet, dass** die Umgebungstemperatur und/oder die Umgebungsfeuchte während des Auftragens überwacht und auf einen jeweils konstanten, vorgegebenen Wert gehalten werden.

15. Verfahren nach einem der vorhergehenden Ansprüche,
**dadurch gekennzeichnet, dass** vor Auftragen der Auftragsmasse auf den Zahnriemenrücken (3) der Zahnriemenrücken einer Reinigung zur Entfernung von Wachsen unterzogen wird.

## Claims

1. A method of production for attachment by cohesive bonding of a profile having at least one profile element (9) onto a toothed belt (1) previously produced as a semi-finished product and having a tooth side (2) with a toothing and a toothed belt back (3) located on the back of the tooth side (2) of the toothed belt (1),
**characterized in that**
the at least one profile element (9) is built up layer by layer from at least one first profile element layer (4) and a second profile element layer (6) on the toothed belt back (3), by the application of an application compound to the toothed belt back (3) at a profile element position by means of melt layer printing.

2. The method according to claim 1, **characterized in that** building up of the at least one profile element (9) comprises the following steps:
• providing a melt layer 3D printer having at least one print head,
• positioning the profile element position of the toothed belt back (3) is positioned in a working range of the print head of the melt layer 3D printer,
• heating at least the profile element position of the toothed belt back (3) to a predetermined application temperature,
• applying the first profile element layer (4) by means of melt layer printing from the application compound, after the toothed belt back has reached the predetermined application temperature,
• starting on the first profile element layer, applying, layer by layer, at least the second profile element layer (6) of the application compound, and
• finishing the at least one profile element by applying profile element layers (4, 6) of the application compound and moving the finished profile element out of the working range.

3. The method according to claim 2, **characterized in that**, during application of a second or a further profile element layer (4, 6) on the profile element layer applied immediately beforehand, the print head is moved to rest thereon in such a way that a pretension is exerted on the previously printed profile element layer (4, 6).

4. The method according to one of the preceding claims, **characterized in that** a first thermoplastic polyurethane is used for the toothed belt back (3) at least at the profile element position.

5. The method according to claim 4, **characterized in that** the predetermined application temperature for the heating of at least the profile element position of the toothed belt back (3) lies between the glass transition temperature of the first thermoplastic polyurethane and a temperature 20 K higher than the glass transition temperature of the first thermoplastic polyurethane.

6. The method according to one of claims 4 to 5, **characterized in that** a polyester and/or a polyether is used as first thermoplastic polyurethane.

7. The method according to one of the preceding claims, **characterized in that** a second thermoplastic polyurethane is used as the application compound.

8. The method according to claim 7, **characterized in that** a polyester and/or a polyether is used as second thermoplastic polyurethane of the application compound.

9. The method according to one of the preceding claims, **characterized in that** the first profile element layer (4) by comparison with the second profile element layer (6) is formed with at least 1.5 times the layer height (5, 8).

10. The method according to one of the preceding claims, **characterized in that** the first profile element layer (4) is printed with a material temperature which is between 5 K and 10 K above the melt temperature of the application compound, and that in the course of the layered application of the profile element layers (4, 6) the material temperature is reduced to a value above the melting temperature of the application compound which is less than 2.5 K, preferably less than 1 K, above the melting temperature of the application compound.

11. The method according to claim 2, **characterized in that** the application compound is applied by means of a robot arm which moves the at least one print head, wherein the robot arm is movable along three spatial axes and in addition is pivotably movable about at least two of the three spatial axes, which are arranged parallel to the toothed belt back, preferably oriented at a right angle to one another.

12. The method according to claim 2, **characterized in that** before the application to the toothed belt back (3) the application compound is stored in a drying chamber and is kept at a predetermined residual moisture content, the application compound being removed therefrom before delivery to the print head.

13. The method according to one of the preceding claims, **characterized in that** the application compound is applied with a residual moisture content of 0.05% by weight or less than 0.05% by weight.

14. The method according to one of the preceding claims, **characterized in that** the ambient temperature and/or the ambient humidity can be monitored during the application and can be kept at a respective constant, predetermined value.

15. The method according to one of the preceding claims, **characterized in that** before application of the application compound to the toothed belt back (3) the toothed belt back is subjected to cleaning for removal of waxes.

## Revendications

1. Procédé de fabrication, destiné à appliquer par matière un profilé pourvu d'au moins un élément de profilé (9) sur une courroie dentée (1) préfabriquée sous la forme d'un produit semi-fini, pourvue d'un côté denté (2) comportant une denture et d'un dos de courroie dentée (3), situé au dos du côté denté (2) de la courroie dentée (1), **caractérisé en ce qu'**on conçoit l'au moins un élément de profilé (9) couche par couche, à partir d'au moins une première couche d'élément de profilé (4) et d'une deuxième couche d'élément de profilé (6) sur le dos de la courroie dentée (3) **en ce qu'**on applique sur une position d'élément de profilé, par dépôt de filament fondu une masse d'application sur le dos de la courroie dentée (3).

2. Procédé selon la revendication 1, **caractérisé en ce que** la conception de l'au moins un élément de profilé (9) comprend les étapes suivantes, consistant à :
• mettre à disposition une imprimante 3D par dépôt de filament, pourvue d'au moins une tête d'impression,
• positionner la position d'élément de profilé du dos de la courroie dentée (3) dans une zone de travail de la tête d'impression de l'imprimante 3D par dépôt de filament,
• chauffer au moins la position d'élément de profilé du dos de la courroie dentée (3) à une température d'application prédéfinie,
• appliquer la première couche d'élément de profilé (4), constituée de la masse d'application par impression par dépôt de filament, une fois que le dos de la courroie dentée a atteint la température d'application prédéfinie,
• en commençant sur la première couche d'élément de profilé, appliquer couche par couche au moins la deuxième couche d'élément de profilé (6) constituée de la masse d'application et
• achever l'au moins un élément de profilé par application de couches d'élément de profilé (4, 6) constituées de la masse d'application et déplacer l'élément de profilé achevé hors de la zone de travail.

3. Procédé selon la revendication 2, **caractérisé en ce que** lors de l'application d'une deuxième ou d'une autre couche d'élément de profilé sur la couche d'élément de profilé (4, 6) appliquée directement précédemment, on déplace en appui la tête d'impression de telle sorte qu'une précontrainte soit exercée sur la couche d'élément de profilé (4, 6) précédemment imprimée.

4. Procédé selon l'une quelconque des revendications précédentes, **caractérisé en ce qu'**on utilise pour le dos de la courroie dentée (3), au moins sur la position d'élément de profilé un premier polyuréthane thermoplastique.

5. Procédé selon la revendication 4, **caractérisé en ce que** la température d'application prédéfinie pour chauffer au moins la position d'élément de profilé du dos de la courroie dentée (3) se situe entre la température de vitrification du premier polyuréthane thermoplastique et une température plus élevée de 20K que la température de vitrification du premier polyuréthane thermoplastique.

6. Procédé selon l'une quelconque des revendications 4 et 5, **caractérisé en ce qu'**en tant que premier polyuréthane thermoplastique, on utilise un polyester et/ou un polyéther.

7. Procédé selon l'une quelconque des revendications précédentes, **caractérisé en ce qu'**on utilise en tant que masse d'application un deuxième polyuréthane thermoplastique.

8. Procédé selon la revendication 7, **caractérisé en ce que** lors de l'application de la masse d'application sous la forme d'un deuxième polyuréthane thermoplastique, on utilise un polyester et/ou un polyéther.

9. Procédé selon l'une quelconque des revendications précédentes, **caractérisé en ce que** qu'on créé la première couche d'élément de profilé (4) par rapport à la deuxième couche d'élément de profilé (6) avec une hauteur de couche (5, 8) au moins 1,5 fois supérieure.

10. Procédé selon l'une quelconque des revendications précédentes, **caractérisé en ce qu'**on imprime la première couche d'élément de profilé (4) à une température de la masse supérieure de 5K à 10K à la température de fusion de la masse d'application et **en ce qu'**au cours de l'application couche par couche des couches d'élément de profilé (4, 6), on abaisse la température de la masse à une valeur supérieure à la température de fusion de la masse d'application qui est supérieure de moins de 2,5K, de préférence de moins de 1K à la température de fusion de la masse d'application.

11. Procédé selon la revendication 2, **caractérisé en ce qu'**on applique la masse d'application à l'aide d'un bras de robot qui déplace l'au moins une tête d'impression, le bras de robot étant déplaçable le long de trois axes spatiaux et étant déplaçable en supplément en pivotement autour d'au moins deux des trois axes spatiaux, lesquels sont placés à la parallèle du dos de la courroie dentée, de préférence en orientation mutuelle sous un angle droit.

12. Procédé selon la revendication 2, **caractérisé en ce qu'**avant l'application sur le dos de la courroie dentée (3), on stocke une masse d'application dans une chambre de séchage et on la garde en réserve avec une humidité résiduelle prédéfinie à partir de laquelle on prélève la masse d'application avant de l'alimenter vers la tête d'impression.

13. Procédé selon l'une quelconque des revendications précédentes, **caractérisé en ce qu'**on applique la masse d'application avec une humidité résiduelle de 0,05 % en poids ou inférieure à 0,05 % en poids.

14. Procédé selon l'une quelconque des revendications précédentes, **caractérisé en ce que** pendant l'application, on surveille la température ambiante et/ou l'humidité ambiante et on les maintient à une valeur prédéfinie, respectivement constante.

15. Procédé selon l'une quelconque des revendications précédentes, **caractérisé en ce qu'**avant l'application de la masse d'application sur le dos de la courroie dentée (3), on soumet le dos de la courroie dentée à un nettoyage, destiné à retirer des cires.
